Europäisches Patentamt

European Patent Office

Office européen des brevets

(11) Publication number: **0 451 126 A1**

## EUROPEAN PATENT APPLICATION

(21) Application number: **91850081.0**

(22) Date of filing: **28.03.91**

(51) Int. Cl.⁵: **F21V 19/00, F16G 11/04**

(30) Priority: **03.04.90 SE 9001229**

(43) Date of publication of application:
**09.10.91 Bulletin 91/41**

(84) Designated Contracting States:
**AT BE CH DE DK ES FR GB GR IT LI LU NL**

(71) Applicant: **ARTILUX AB**
**Box 158**
**S-334 00 Anderstorp (SE)**

(72) Inventor: **Hurtig, Göran**
**Apelgatan 5**
**S-332 00 Gislaved (SE)**

(74) Representative: **Bjelkstam, Peter**
**Radjursvägen 11**
**S-131 42 Nacka (SE)**

(54) Cord clamp for a lampholder.

(57)    The invention relates to a cord clamp (1) in a lampholder (3), and includes at least two tongue elements (4,5) which are mutually, reciprocally and relatively movable, and between which a cord (6) can be squeezed with the aid of a clamping keeper means (2). The elements (4,5) comprise separate parts, laterally movable in relation to each other and have one end or base portion (7) arranged at an opening (9) in the end portion (8) of the lampholder (3), the base portion (7) being in sliding engagement against the end portion (8), the other free end or top portions (10) of the elements being adapted to extend through an opening (11) in the clamping keeper means (2) also includes hooked snapping tongues (13,14) projecting from the disc-like element for coaction with complementarily formed locking grooves (15,16) on the lampholder (3). The keeper means (2) in its position fully thrust over the tongue elements and the end portion (8) of the lampholder achieves a permanent snap fastening of itself as well as secure positional fixation of the cord (6) in the lampholder.

Fig. 1

The present invention relates to a cord clamp in a lampholder and includes at least two elongate tongue elements at given, mutual spacing disposed such as to be movable to and from each other, a cord to the lampholder being taken along and between them for being positionally fixable with the aid of a clamping keeper means which can be pushed over them and thus press them together.

Previously known cord clamps of similar type have screw means for clamping spring tongues against a cord, or caps which can be snapped onto the tongues for squeezing them together. These cord clamps have fixed tongues projecting from the lampholder, and these tongues deflect a great deal in the region of their free end portions and very little in the region where they are fixed or enter into the lampholder. There is thus no uniform engagement of the inside of the tongues against the cord, and consequently the cord is unsatisfactorily fixed in position.

The object of the present invention is to provide a cord clamp of the kind mentioned in the introduction, where the above-mentioned disadvantages have been eliminated. The features characterizing the invention are disclosed in the accompanying claims.

Due to the invention, there has now been provided a cord clamp that fulfills its purpose in an excellent manner, while being at the same time very simple and cheap to manufacture. No screw means are necessary, and the positional fixation of the cord by the clamp takes place easily by permanently snapping on the special clamping keeper means at the lampholder. In addition there is afforded a uniform, parallel engagement of the insides of the tongue elements against the cord, since they comprise separate elements movable to and from each other, thus providing secure fixation of the cord.

The invention will now be descibed, with reference to the accompanying drawings, where,

Fig. 1 is a schematic cross section of the inventive cord clamp, illustrated in a preferred embodiment,

Fig. 2 is a view from above, to an enlarged scale, of the tongue elements illustrated in Fig.1,

Fig. 3 is a cross section, to an enlarged scale, of the tongue elements when they coact with the opening of the clamping keeper means,

Fig. 4 depicts the keeper means to an enlarged scale, as seen from below,

Fig. 5 is a side view to an enlarged scale of the keeper in Fig.4,

Fig. 6 is a full scale side view of the tongue elements and

Fig. 7 is a full scale view from below of the tongue elements in Fig.6.

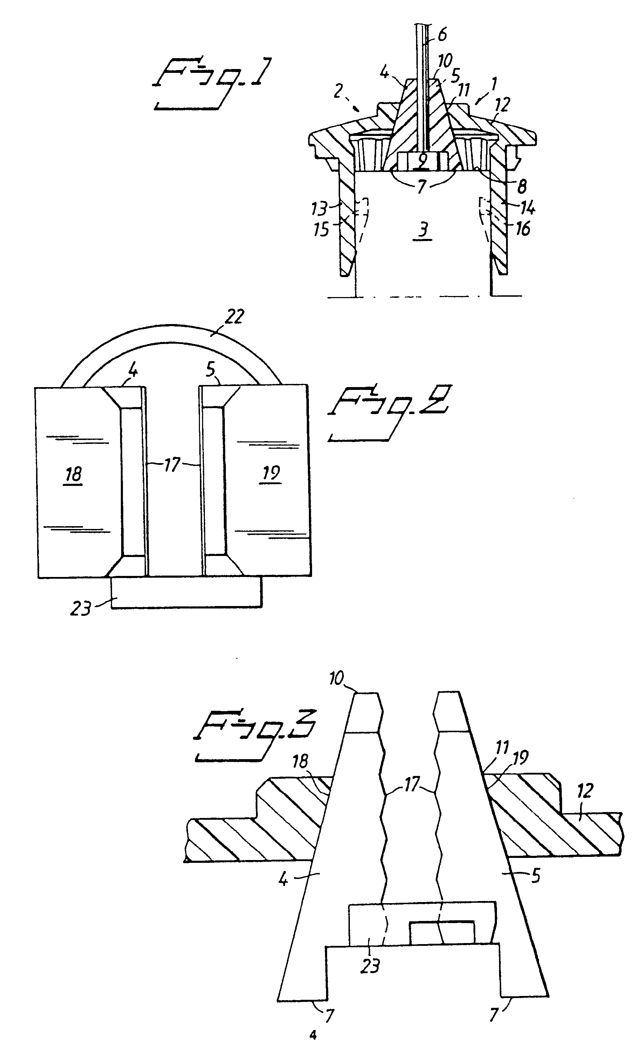

In Fig.1 there is illustrated a cross section of a preferred embodiment of a cord clamp 1 in accordance with the present invention, and which is permanently snapped together with the aid of clamping keeper means 2 on a lampholder 3. Further to the keeper means 2 the cord clamp 1 includes at least two elongate tongue elements 4 and 5, which are mutaually movable to and from each other, there being a cord 6 disposed along and between them such as to be positionally fixed to the lampholder 3 by squeezing the tongue elements 4 and 5 together with the aid of the keeper means 2.

At one end or base portion 7 the tongue elements 4,5 are arranged slidably against the end portion 8 of the lampholder 3 around an opening 9 for the cord. The other, free end or top portions 10 of the tongue elements 4,5 are arranged to extend through an opening 11 in the keeper means 2 whereby they can be urged together. The opening 11 is centrally placed in a disc-shaped member 12, from which there project at least two hooked snap tongues 13 and 14 coacting with complementarily formed locking grooves 15 and 16 on the lampholder 3. The keeper means 2 is thus snappably and permanently fixable to the lampholder 3, when the former is pushed into a final position where the tongue elements 4,5 are urged with a sufficient, given force against the cord 6, thus achieving a secure fixation of the cord.

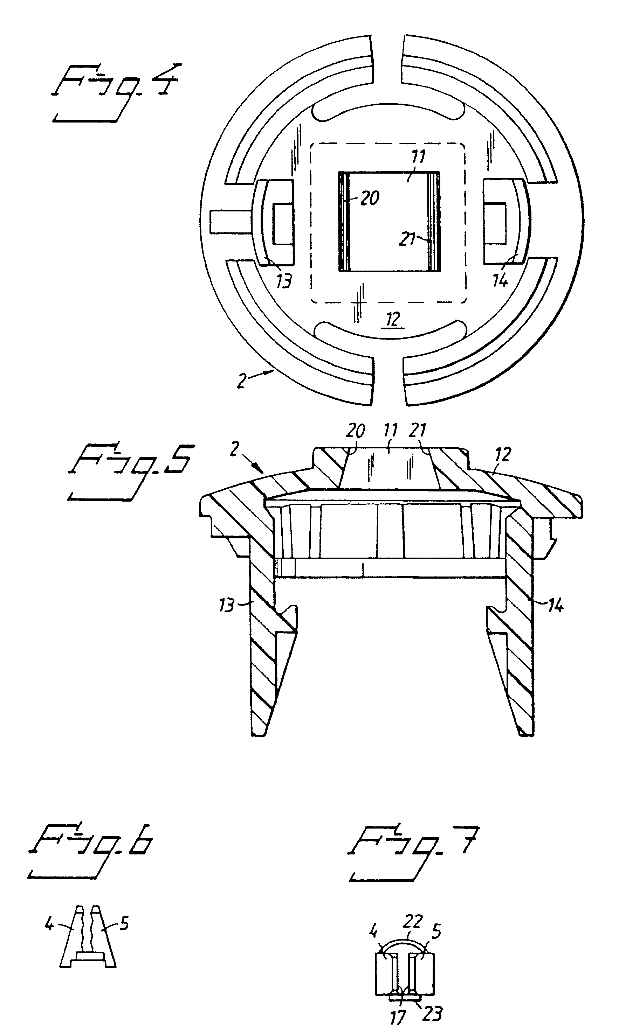

As will be seen in more detail in Fig.2 and 3, the tongue elements 4,5 may be provided on their insides with serrations 17 for providing a better grip on the cord 6. The elements 4,5 are mutually connected by connecting tabs 22 and 23 at their base portions for maintaining them in predetermined, mutual spacing substantially corresponding to the thickness of the cord 6. In addition, the radially outward surfaces 18 and 19 of the elements 4,5 may converge at about 15° to the longitudinal direction of the elements, these surfaces being arranged to coact with complementary slanting surfaces on two opposing edge portions 20 and 21 in the opening 11 of the keeper means 2.

In Fig.4 the appearance of the opening 11 is depicted in more detail in a view from below, and in Fig.5 there is shown a cross-sectional side view of the keeper means 2. Finally, in Fig.6 and 7 the tongue elements 4,5 are depicted in their natural size.

## Claims

A cord clamp in a lampholder, said clamp including at least two elongate tongue elements (4,5) at given mutual spacing and disposed such as to be movable to and from each other, a cord (6) to the lampholder (3) being taken along and between said elements for being positionally fixable by squeezing said elements together with the aid of a clamping keeper means (2), which can be pushed over said elements and thus urge them together, **characterized in** that said tongue elements (4,5) comprise separate parts, laterally movable in relation to each other and which have one end or base portion (7) arranged around an opening (9) for the cord in the end portion (8) of the lampholder, the base portion (7) being in sliding engagement against the end portion (8), the other free end portion or top portion (10) of said elements being adapted to extend through an opening (11) in the clamping keeper means (2), said opening being such as to urge together said elements (4,5), the keeper means also including, further to a disc-like element (12) in which the opening (11) is made, hooked snapping tongues (13,14) projecting from the disc-like element (12) for coaction with complementarily formed locking grooves (15,16) on the lampholder (3), said keeper means (2) in its position fully thrust over said tongue elements (4,5) and the end portion (8) of the lampholder achieving a permanent snap fastening of the keeper means (2) as well as a secure positional fixation of the cord (6) in the lampholder (3).

2. Cord clamp as claimed in claim 1, **characterized in** that the tongue elements (4,5) each having at least one radially outward surface (18,19), said surfaces (18,19) mutually converging towards the top portion of said elements, for coaction with two opposing edge portions (20,21) in the opening (11) of the clamping means.

3. Cord clamp as claimed in claim 1 or 2, **characterized in** that the converging side surfaces (18,19) of the tongue elements (4,5) form an angle of about 15° to the longitudinal direction of said elements.

4. Cord clamp as claimed in claim 1, **characterized in** that the tongue elements (4,5) comprise two separate elements mutually connected at their base portion (7) by connecting members (22,23) at a mutual spacing substantially corresponding to the thickness of an electrical cord.

5. Cord as claimed in claim 1, **characterized in** that the respective tongue element (4,5) has a rectangular shape in cross section.

Fig.1

Fig.2

Fig.3

4

Fig.4

Fig.5

Fig.6

Fig.7

European Patent Office

**EUROPEAN SEARCH REPORT**

Application Number

EP 91 85 0081

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-8 528 117 (VOSSLOH-WERKE GmbH) * Page 6, line 10 - page 7, line 27; figure * | 1 | F 21 V 19/00 F 16 G 11/04 |
| Y | US-A-3 374 511 (BARKER) * Claims 1,2; figures 1-5 * | 1 | |
| A | DE-A-3 813 233 (VLM-W. MURJAHN GmbH & CO.) * Column 3, line 54 - column 5, line 8; figures 1-4 * | 1 | |
| A | US-A-3 056 852 (SACHS) * Claims 1,2; figures 1-6 * | 1,2,4 | |
| A | WO-A-8 808 103 (ARTILUX AB) * Claims 1,2,5; figures 1-7 * | 1,5 | |
| | | | **TECHNICAL FIELDS SEARCHED (Int. Cl.5)** |
| | | | F 16 G H 01 R F 21 S F 21 V |

The present search report has been drawn up for all claims

| Place of search | Date of completion of the search | Examiner |
|---|---|---|
| THE HAGUE | 17-06-1991 | MARTIN C.P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document